Europäisches Patentamt

**European Patent Office**

Office européen des brevets

(19)

(11) Veröffentlichungsnummer: **0 087 103**

**A1**

(12) # EUROPÄISCHE PATENTANMELDUNG

(21) Anmeldenummer: **83101415.4**

(22) Anmeldetag: **14.02.83**

(51) Int. Cl.³: **H 02 G 11/06**

(30) Priorität: **22.02.82 DE 3206326**

(43) Veröffentlichungstag der Anmeldung:
**31.08.83 Patentblatt 83/35**

(84) Benannte Vertragsstaaten:
**CH DE FR GB LI SE**

(71) Anmelder: **Oerlikon-Boehringer GmbH**
**Stuttgarter Strasse 50 Postfach 220**
**D-7320 Göppingen(DE)**

(72) Erfinder: **Kienhöfer, Hermann**
**Laichingerstrasse 21**
**D-7320 Göppingen(DE)**

(72) Erfinder: **Räder, Robert**
**St. Galler-Strasse 17**
**D-7320 Göppingen-Faurndau(DE)**

(74) Vertreter: **Vogeser, Werner, Dipl.-Ing. et al,**
**Patentanwälte Hansmann & Vogeser**
**Albert-Rosshaupter-Strasse 65**
**D-8000 München 70(DE)**

(54) **Energiezuführungsanordnung für einen verfahrbaren Verbraucher.**

(57) Die Erfindung schafft eine Energiezuführungsanordnung für einen verfahrbaren Verbraucher, zum Beispiel den Reitstock einer Drehmaschine, bei der die Versorgungsleitungen des Verbrauchers in einem nur in einer Richtung beweglichen Energiezuführungselement, zum Beispiel einer aus einzelnen gelenkig verbundenen Gliedern bestehenden Energiezuführungskette geführt sind, das am einen Ende am Verbraucher mit diesem verschiebbar und am anderen Ende fest angeordnet ist. Um zu erreichen, daß ein freier Spänefall bei möglichst geringem Stauraum außerhalb des Verfahrweges des Verbrauchers bzw. außerhalb der Maschine ermöglicht wird, ist der Stauraum des Energiezuführungselements außerhalb des Verfahrwegs in nicht paralleler Richtung zu diesem angeordnet.

FIG. 3

EP 0 087 103 A1

Energiezuführungsanordnung für einen verfahrbaren
Verbraucher

Die Erfindung betrifft eine Energiezuführungsanordnung entsprechend dem Oberbegriff des Anspruches 1.

Es ist zum Beispiel bei Werkzeugmaschinen bekannt, die Energiezuführung zu bestimmten Baugruppen, zum Beispiel dem Reitstock einer Drehmaschine mittels sogenannter Energiezuführungsketten durchzuführen, in denen die eigentlichen Versorgungsleitungen geschützt geführt sind. Diese Energiezuführungsketten bestehen zum Beispiel aus einzelnen gelenkig verbundenen Kunststoffgliedern, so dass die Kette bis zu einem durch die Grösse der Kettenglieder bestimmten minimalen Krümmungsradius in nur einer Richtung gebogen werden kann. Diese Ketten sind am einen Ende am verfahrbaren Verbraucher und am anderen Ende an einem stationären Teil der Maschine befestigt.

Werden derartige Ketten bei Werkzeugmaschinen in einem Arbeitsraum verwendet, so sollten sie möglichst so angeordnet sein, dass die am Verbraucher erzeugten Späne nach unten abgeführt werden, ohne dass sie auf die Kette fallen, da sich vor allem lange und dünne Späne in den Kettengliedern verhaken können.

Befestigt man das eine Ende der Kette etwa in der Mitte des Verfahrweges des Verbrauchers, dann ist der Späneabfall in der vorderen Stellung des Verbrauchers durch die Kette unbehindert. Befindet sich jedoch der Verbraucher in der hinteren Stellung oder einer Zwischenstellung zwischen der mittleren und der hinteren Stellung, dann können Späne auf die Kette fallen.

Zur Beseitigung dieses Nachteils ist es möglich, das eine Kettenende am hinteren Ende des Verfahrweges des Verbrauchers zu befestigen. In diesem Falle ist der Späneabfall in jeder Stellung des Verbrauchers unbehindert, jedoch wird für den Stauraum der Kette ausserhalb des Verfahrweges und damit auch meist ausserhalb der Maschine ein erheblicher Platz benötigt. Die Länge dieses Stauraumes parallel zum Verfahrweg ist gleich der halben Länge des Verfahrweges plus dem minimalen Krümmungsradius der Energiezuführungskette.

Der Erfindung liegt die Aufgabe zugrunde, die Energiezuführungsanordnung der eingangs genannten Art so auszubilden, dass ein freier Spänefall bei möglichst geringem Stauraum ausserhalb des Verfahrweges des Verbrauchers bzw. ausserhalb der Maschine ermöglicht wird.

Gelöst wird diese Aufgabe gemäss der Erfindung durch die im kennzeichnenden Teil des Anspruches 1 angegebenen Merkmale. Zweckmässige Ausgestaltungen der Erfindung ergeben sich aus den Unteransprüchen.

Die Anordnung des Stauraumes kann auf verschiedene Arten erfolgen. So ist es zum Beispiel möglich, eine Ablegeschiene ausserhalb des Verfahrweges des Verbrauchers und rechtwinklig zu diesem anzuordnen, so dass sich das Energiezuführungselement bei senkrechter Anordnung der Ablegeschiene auch nach oben staut, wenn sich der Verbraucher aus seiner vorderen in seine hintere Stellung bewegt. Auf diese Weise wird der normalerweise ungenützt zur Verfügung stehende Raum oberhalb der Maschine ausgenutzt.

Der Abstand der Ablegeschiene von der Maschine bzw. dem hinteren Ende des Verfahrweges hängt von der Art der Befestigung des Energiezuführungselements am Verbraucher ab. Wählt man eine Befestigung mit einem Krümmungsradius von $90^{\circ}$, so braucht dieser Abstand nur gleich dem doppelten kleinsten Krümmungsradius des Energiezuführungselements zu sein. Bei einem Krümmungsradius grösser als $90^{\circ}$ nimmt der Abstand entsprechend zu, bei einem Krümmungsradius kleiner als $90^{\circ}$ dagegen kann er bis auf die Dicke des Energiezuführungselements verringert werden. Das Energiezuführungselement kann mit dem Verbraucher auch gelenkig verbunden sein.

Die Erfindung ist nachstehend anhand der Fig. 1 bis 6 beispielsweise erläutert.

Es zeigt:

Fig. 1 eine perspektivische Darstellung einer bekannten Energiezuführungskette,

Fig. 2 eine bekannte Energiezuführungsanordnung, und

Fig. 3 bis 6 Ausführungsformen der Erfindung.

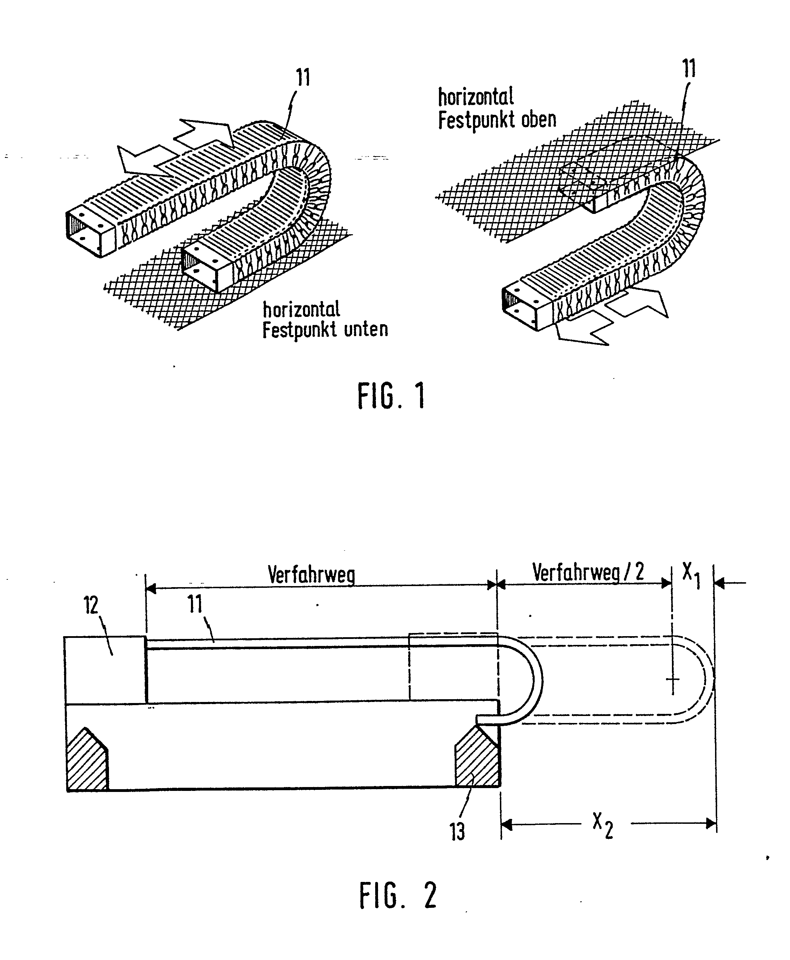

Die Energiezuführungskette besteht, wie Fig. 1 zeigt, aus einzelnen gelenkig verbundenen Gliedern und kann in einer Richtung unter einem bestimmten Krümmungsradius gekrümmt werden. Das eine Ende der Kette kann mit einem verfahrbaren Verbraucher und das andere mit einem stationären Teil der Maschine verbunden sein.

Bei der in Fig. 2 gezeigten Anordnung ist das eine Ende der Kette mit einem Verbraucher 12, zum Beispiel dem Reitstock einer Drehmaschine, verbunden und das andere Ende ist am hinteren Ende des Verfahrweges des Verbrauchers stationär an der Maschine befestigt. Sowohl in der vorderen Verbraucherstellung als auch in der gestrichelt gezeigten hinteren Verbraucherstellung können die am Verbraucher entstehenden Späne zwischen den Rippen 13 der Maschine nach unten fallen.

In der hinteren Verbraucherstellung jedoch ist die Länge $X_2$ des über den Verfahrweg bzw. die Maschine überstehenden Stauraumes gross. Die Länge $X_2$ ist dabei gleich dem halben Verfahrweg plus dem kleinstmöglichen Krümmungsradius der Kette.

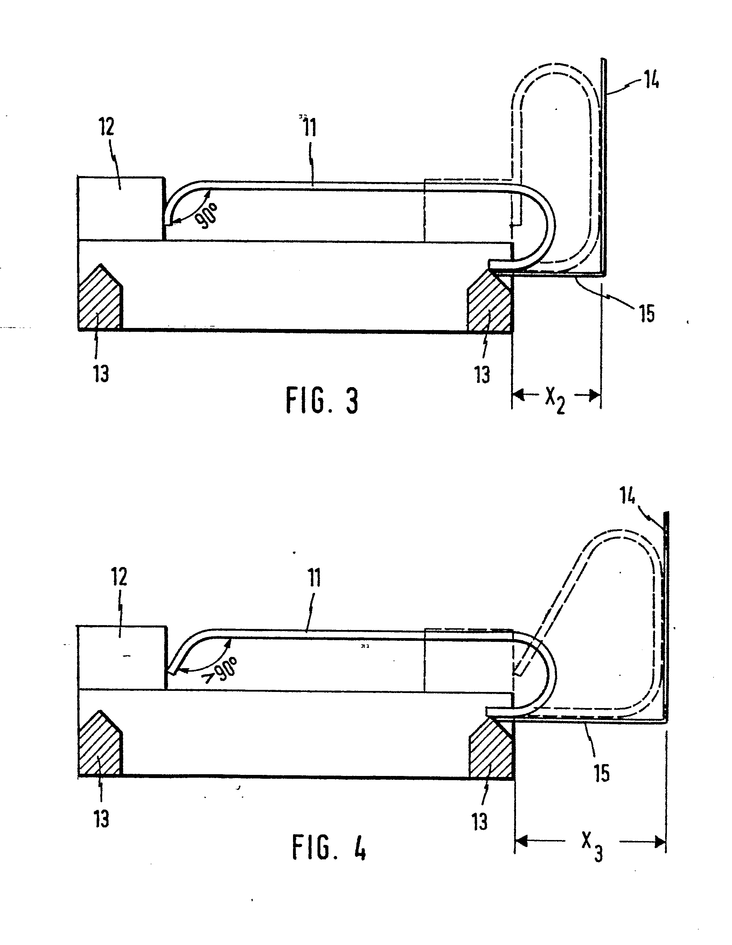

Bei der in Fig. 3 gezeigten Ausführungsform der Erfindung ist ausserhalb des horizontalen Verfahrweges des Verbrauchers 12 eine vertikale Ablegeschiene 14 angeordnet, die zweckmässigerweise U-Profil hat, so dass sich die Kette in der hinteren Verbraucherstellung nach oben staut. Die Länge $X_2$ des Stauraumes
wird dabei nur von dem doppelten kleinstmöglichen Krümmungsradius der Kette bestimmt. Der Stauraum kann nach unten durch
eine horizontale, ebenfalls ein U-Profil aufweisende Auflageschiene 15 begrenzt sein.

Bei der Ausführungsform der Fig. 3 ist es erforderlich, dass
das vordere Ende der Kette mit dem Verbraucher unter einem
Krümmungsradius von $90^{\circ}$ oder gelenkig mit einem Schwenkwinkel von $90^{\circ}$ verbunden ist.

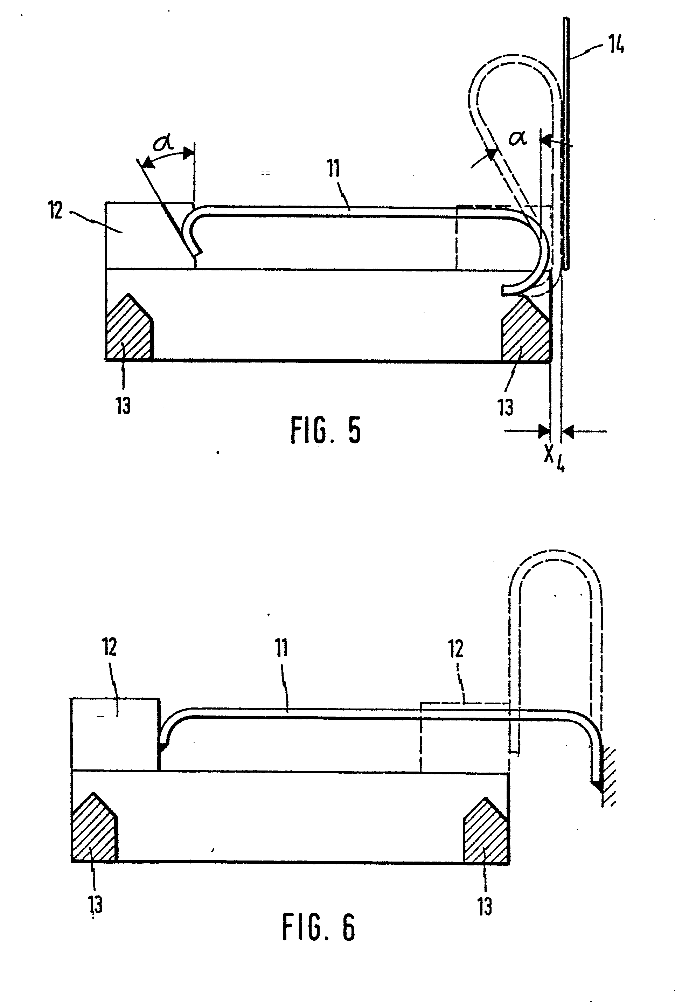

Ist der Krümmungsradius grösser als $90^{\circ}$, wie Fig. 4 zeigt,
dann ist die Länge $X_3$ des Stauraumes entsprechend grösser,
um die Kette in der hinteren Verbraucherstellung im Stauraum unterbringen zu können.

Fig. 5 zeigt eine Ausführungsform, bei der die Länge $X_4$ nur
der Dicke der Energiezuführungskette 11 entspricht. Bei dieser
Ausführungsform ist es erforderlich, dass die Energiezuführungskette 11 am Verbraucher 12 unter einem Winkel von $\alpha < 90^{\circ}$ befestigt ist. Dieser Winkel ergibt sich dann auch bei der gestrichelt
gezeigten hinteren Stellung des Verbrauchers.

Fig. 6 zeigt eine Ausführungsform, bei der keine Ablegeschiene
vorgesehen ist, sondern das hintere Ende der Energiezuführungskette 11 senkrecht fest angeordnet ist. Dies kann zum Beispiel
durch Befestigung an einer Wand geschehen.

Patentansprüche

1. Energiezuführungsanordnung für einen verfahrbaren Verbraucher, zum Beispiel den Reitstock einer Drehmaschine, bei der die Versorgungsleitungen des Verbrauchers in einem nur in einer Richtung beweglichen Energiezuführungselement, zum Beispiel einer aus einzelnen gelenkig verbundenen Gliedern bestehenden Energiezuführungskette, geführt sind, das am einen Ende am Verbraucher mit diesem verschiebbar und am anderen Ende fest angeordnet ist, dadurch gekennzeichnet, dass der Stauraum des Energiezuführungselements ausserhalb des Verfahrweges in nicht paralleler Richtung zu diesem angeordnet ist.

2. Anordnung nach Anspruch 1, gekennzeichnet durch eine Ablegeschiene (14), die mit Abstand (X) ausserhalb des Verfahrweges rechtwinklig zu diesem angeordnet ist.

3. Anordnung nach Anspruch 1 oder 2, dadurch gekennzeichnet, dass das Energiezuführungselement (11) am Verbraucher (12) unter einem Winkel von 90° befestigt ist (Fig. 3).

4. Anordnung nach Anspruch 1 oder 2, dadurch gekennzeichnet, dass das Energiezuführungselement am Verbraucher (12) unter einem Winkel von mehr als 90° befestigt ist (Fig. 4).

5. Anordnung nach Anspruch 1 oder 2, dadurch gekennzeichnet, dass das Energiezuführungselement (11) am Verbraucher (12) unter einem Winkel von weniger als 90$^\circ$ befestigt ist (Fig. 5).

6. Anordnung nach Anspruch 1 oder 2, dadurch gekennzeichnet, dass das Energiezuführungselement mit dem Verbraucher gelenkig verbunden ist.

7. Anordnung nach einem der Ansprüche 1 bis 6, dadurch gekennzeichnet, dass das Energiezuführungselement (11) an dem fest angeordneten Ende senkrecht zum Verfahrweg angeordnet ist (Fig. 6).

8. Anordnung nach einem der Ansprüche 1 bis 7, gekennzeichnet durch eine ausserhalb des und parallel zu dem Verfahrweg angeordnete Auflageschiene (15) zur Begrenzung des Stauraumes.

9. Anordnung nach einem der Ansprüche 1 bis 8, dadurch gekennzeichnet, dass die Schiene bzw. die Schienen (14, 15) U-Profil haben.

11

horizontal
Festpunkt oben

11

horizontal
Festpunkt unten

## FIG. 1

Verfahrweg

Verfahrweg / 2

$X_1$

12

11

13

$X_2$

## FIG. 2

FIG. 3

FIG. 4

FIG. 5

FIG. 6

Europäisches
Patentamt

**EUROPÄISCHER RECHERCHENBERICHT**

**0087103**
Nummer der Anmeldung

EP 83 10 1415

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | WERKSTATTSTECHNIK, ZEITSCHRIFT FÜR INDUSTRIELLE FERTIGUNG, Band 64, Nr. 10, 1974, Seiten 609-611, Springer Verlag, Berlin, DE. D. STEINMETZ: "Energieführungsketten und -Einrichtungen an Werkzeugmaschinen" * Seite 609; Seite 610, linke Spalte, rechte Spalte, Absätze 1-3; Figuren 1-6 * | 1 | H 02 G 11/06 |
| A | US-A-3 448 346 (NASA) * Spalte 2, Zeile 50 - Spalte 3, Zeile 60; Figuren 1,2 * | 1 | |
| A | US-A-3 020 362 (KABELSCHLEPP) * Spalte 2, Zeile 38 - Spalte 3, Zeile 27; Figuren 1-4 * | 1 | RECHERCHIERTE SACHGEBIETE (Int. Cl. ³) |
| A | GB-A- 819 862 (HANCOCK) * Seite 1, Zeile 64 - Seite 2, Zeile 79; Figuren 1,2 * | 1,8,9 | H 02 G 11/00<br>F 16 G 13/00<br>F 16 L 3/00<br>B 23 Q 1/00<br>B 66 C 13/00 |

Der vorliegende Recherchenbericht wurde für alle Patentansprüche erstellt.

| Recherchenort<br>DEN HAAG | Abschlußdatum der Recherche<br>27-04-1983 | Prüfer<br>LOMMEL A. |
|---|---|---|